# EUROPEAN PATENT APPLICATION

(11) **EP 3 176 737 A1**
(43) Date of publication of application: **07.06.2017**
(21) Application number: 15382610.2
(22) Date of filing: 04.12.2015
(51) Int. Cl.: G06Q 10/06

(54) **A SYSTEM AND METHOD FOR VALIDATING THE PRE-OPERATION PHASE OF A VEHICLE**

(71) Applicant: The Boeing Company, Chicago, IL 60606-1596 (US)
(72) Inventor: VALLS HERNANDEZ, Ernesto, 28042 Madris (ES); BLANCO, José Antonio, 28042 Madrid (ES)
(74) Representative: Carvajal y Urquijo, Isabel

(57) **Abstract**

A system and method for validating the pre-operation phase of a vehicle. The system comprises a central control station with access to a network-centric database storing a plurality of individualized task electronic checklists, and a plurality of portable electronic devices wirelessly coupled with the central control station. Each portable electronic device is assigned to a validator and is configured to display at least one individualized task electronic checklist to the validator, receive individual checklist results from the validator of one or more implemented tasks on the checklist; and communicate the individual checklist results to the central control station, which automatically updates the network-centric database. The updated checklist information stored in the network-centric database is remotely accessible to the portable electronic devices. This way, the verification process during the preflight phase is optimized, the probability of inflight emergency situations occurrence being minimized.

## Description

### FIELD

The present disclosure is related to validation processes implemented prior to the operation of a vehicle, such as the preflight checklists of an airplane or an unmanned aerial vehicle.

### BACKGROUND

Inspection and validation tasks of aircraft systems, such as unmanned aircraft systems or commercial airplanes, at a preflight phase are collaborative processes that usually require the participation of several validators (e.g. pilot, engineers, technicians). Each validator may be tasked with checking, verifying, or validating the proper operation of certain systems of the aircraft (aerodynamic surfaces, structure, communications, etc.) or the proper conditions of certain aspects of the mission (estimated fuel consumption, weather, etc.). To carry out those validation processes for an aircraft prior to flight, the validators usually follow strict protocols supported by preflight checklists.

Checklists are typically paper documents that include a list of check points that each validator must accomplish during the preflight phase. Traditionally, validators manually mark the check points on the checklist paper and identify either potential issues of the aircraft systems or potential issues for the flight mission that will be further reviewed by the responsible mission personnel before flight. Although checklists are simple, their use and the validation process itself are subject to several drawbacks.

As a first drawback, current paper checklists are static and cannot be dynamically modified. The validation of the check points and their priority order are static during the validation process, since changing them would require an additional coordination effort among the team members that will get the validators distracted from their duties, thus decreasing efficiency. Another drawback of current paper checklists is a lack of coordination which can also lead to inefficient processes, since verifications of each validator are not shared with the rest of the team until the end of the preflight validation phase.

Further, since the entirety of the checked information is distributed over a number of individual paper checklists, the responsible mission personnel have to wait for all the validators to complete their checking tasks in order to have an overall status of both the aircraft and the mission, before making final decisions about whether to continue with the flight or not. This process of accumulating the necessary information can introduce a significant delay before the responsible mission personnel can make their final decision. Moreover, a significant issue produced by the concurrency of a number of minor issues cannot be identified until the end of the validation process. Only when validators have finished their tasks, can the flight team assess if a significant issue may be produced by the concurrency of some minor issues. Such a significant issue could lead to an inflight emergency situation.

In addition, there is no automatic registration of checklist events in current validation processes. In order to store the checklist information in a historical record (e.g. flight database), the completed checklist information must be manually converted into a digital format.

The present disclosure optimizes the validation process during the preflight phase to minimize the occurrence of inflight emergency situations.

### SUMMARY

The present disclosure provides systems and methods to validate the pre-operation phase of a vehicle. The disclosed systems and methods can be applied to any vehicle having a validation process prior to operating the vehicle, preferably vehicles with complex pre-operation requirements, such as a Formula One car, an airplane or an unmanned aerial vehicle (UAV). The pre-operation phase of a vehicle includes all the validation or verification steps followed by one or more validators (e.g. pilot, crew member, mechanics, engineer) before the vehicle can begin a mission. The pre-operation phase of airplanes or UAVs is the preflight phase. The validation process of the vehicle prior to initiating a mission normally includes checking certain systems of the vehicle itself (e.g. mechanical and electronic components, structure, communications, etc.), but it can also include checking particular aspects of the mission external to the vehicle, such as weather forecast, estimated fuel consumption based on either the selected route or flight plan.

In accordance with one aspect of the present disclosure there is provided a system for validating the pre-operation phase of a vehicle. The system comprises a central control station with access to a network-centric database storing a plurality of individualized task electronic checklists, and a plurality of portable electronic devices. The electronic devices comprise a communications module to establish a link with the central control station. Each portable electronic device is assigned to a validator. The portable electronic device comprises a display, an input device and a processing unit configured to display at least one individualized task electronic checklist to the validator, receive individual checklist results from the validator of one or more implemented tasks on the checklist and communicate the individual checklist results to the central control station.

The central control station is configured to automatically update the network-centric database with the individual checklist results of the portable electronic devices. The updated checklist information stored in the network-centric database is remotely accessible to the portable electronic devices.

In a preferred embodiment the portable electronic devices are handheld electronic devices. The communications module of the portable electronic devices is preferably a wireless communications module.

The individualized task electronic checklists preferably comprise a sequence of checklist operations to be performed in a determined order.

In a preferred embodiment, the central control station is configured to dynamically update the individualized task electronic checklists based on the individual checklist results received, and send the updated individualized task electronic checklists to the portable electronic devices.

The central control station may be configured to provide an accumulation of the individual checklist results of the portable electronic devices to a mission manager for deciding on initiating a mission, aborting a mission, temporarily postponing a mission of the vehicle, or modifying the individualized task electronic checklists.

The central control station is preferably configured to provide a real time evaluation of the validation process of the pre-operation phase.

According to a preferred embodiment, the vehicle is preferably an aircraft or an unmanned aerial vehicle, so that pre-operation refers to preflight phase. In that case, the individualized task electronic checklists may comprise a plurality of preflight checklist tasks including aircraft systems, aircraft structure, aircraft flight surfaces, aircraft sensors, aircraft lighting systems, aircraft weapon systems, aircraft communication systems, aircraft control systems, aircraft fuel, aircraft propulsion systems, specific aircraft requirement based on an aircraft mission, specific aircraft requirements based on environmental conditions, or a combination thereof.

The network-centric database may contain historical information of previous missions of the vehicle and the hours of use of components of the vehicle to automatically determine when a component is about to reach its end of life.

In accordance with a further aspect of the present disclosure there is provided a method for validating the pre-operation phase of a vehicle. The method comprises coupling a plurality of portable electronic devices to a central control station with access to a network-centric database storing a plurality of individualized task electronic checklists; assigning each portable electronic device to a validator; displaying in each portable electronic device at least one individualized task electronic checklist assigned to the validator; upon validation of implemented tasks of the checklist, communicating the individual checklist results of the portable electronic devices to the central control station; automatically updating the network-centric database with the individual checklist results of the portable electronic devices; and providing the portable electronic devices with remote access to the updated checklist information stored in the network-centric database.

The method may further comprise dynamically updating, in the network-centric database, the individualized task electronic checklists based on the individual checklist results received, and sending the updated individualized task electronic checklists to the portable electronic devices.

The method preferably comprises providing a mission manager with an accumulation of the individual checklist results of the portable electronic devices for deciding on initiating a mission, aborting a mission, temporary postponing a mission of the vehicle, or modifying the individualized task electronic checklists.

The system evaluates the status of the pre-operation phase by means of network-centric electronic checklists. For instance, unmanned aircraft systems (UAS) are high complexity systems that require strong supervision during the preflight phase to ensure successful missions. The system facilitates the coordination of supervision tasks through dynamic electronic checklists, updated in real time in the network-centric database which is remotely accessible. The present disclosure makes also possible to store checklists and historical information of UAS, and enables displaying the necessary information to optimize verification processes. Such stored information in conjunction with internal checking processes allows automating certain tasks to optimize the verification processes.

The system optimizes the verification and validation procedures of the vehicle, such as an UAV, making them more reliable during the preflight phase by using a central computer system comprising a network-centric database linked to mobile electronic devices provided to the validators. The system enables sharing updated mission information in real time among the validators, such as the individual checklists of each team member, the verifications still to be done, the progress in the completion of dependent verifications tasks, personalized messages among validators, etc. Sharing this kind of information increases the efficiency of the process.

The network-centric database stores relevant information that is remotely accessible for the validators during the validation tasks. Due to the information available in the database, the system automates certain verification tasks and increases the robustness of the validation process (e.g. logging of completed verifications and their status into the database, foreseen potential conflicts of the mission with the number of cycles of use of each installed component).

The portable electronic devices are capable of displaying particularized information related to completed tasks and pending tasks to be performed by the validator. This information can be modified at any stage for coordination purposes with other validators, thus making the process much more efficient.

The system is capable to store all the information (e.g. tasks already finished, faults found during the process, digital signature of responsible person of each task, etc.) into a database, making possible both the traceability of the validation processes as well as further analysis, if necessary.

The system also enables the automation of certain tasks. Besides, since the central computer system can certainly manage much more information and in a faster manner than a human validator, it can detect potential catastrophic failures at early verification stages (e.g. due to end-of-life of components reached during the mission or a combination of single failures found by different validators at different verifications stages). In addition, if some of the necessary steps to be taken during the preflight is not correctly done by any reason (the utilized checklist is not updated, a radio controller's lever is not in its neutral position, some piece has fulfill its life cycle without being replaced by a new spare part, etc.) the system can autonomously take control and disable the engine start, avoiding the take-off sequence and informing of the situation.

The present disclosure provides many other advantages. For instance, for a case when a validator has his following verification task blocked since it depends on another validator's verification task that has failed or suffers a delay, in such case, the dynamic checklist feature implemented by the system allows making the process more efficient, by assigning the pending checking point to the validator that has the failure and freeing up the other validator to continue with other tasks while the problem is solved.

The present disclosure also allows monitoring the validation processes by the mission manager in real time during its execution, anticipating the final results and thus saving time. The system can automatically update and change the validator's checklists based on the status of the individual tasks, for instance by adding new tasks in the checklist, temporarily halting some tasks or altering the order of the tasks. Ultimately, the system allows the mission manager to manually modifying the checklists.

The present disclosure also enables an efficient and alternative channel, other than audio, for communication among validators using their mobile electronic devices, improving the coordination of the team in a noisy environment.

The system may improve the reliability of UAS missions and reduce operational costs by saving preparation time.

The present disclosure has a wide scope of application. Although preferably applied to improve mission performance of unmanned systems, it can also be used in more complex and bigger aircrafts, such as military or commercial airplanes.

As a result, the present disclosure overcomes the drawbacks of current validation processes, optimizing the efficiency, increasing the level of automation, and making the overall verification and validation procedure faster and more reliable.

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

A series of drawings which aid in better understanding the disclosed embodiments and which are expressly related with an embodiment, presented as a non-limiting example thereof, are very briefly described below.
Figure 1 depicts a schematic representation of a system for validating the pre-operation phase of a vehicle.
Figure 2 shows a logical schematic representation of Figure 1.

### DETAILED DESCRIPTION

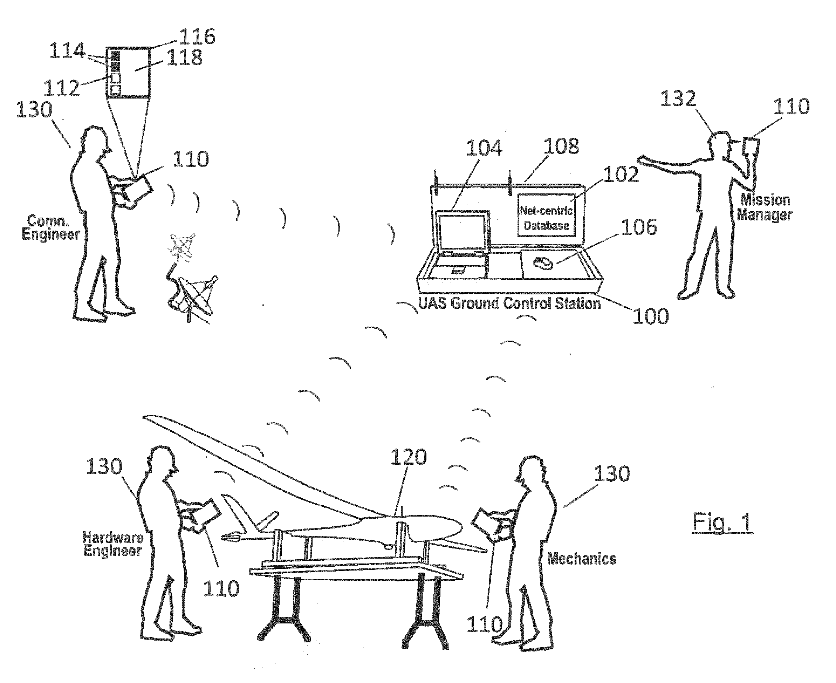

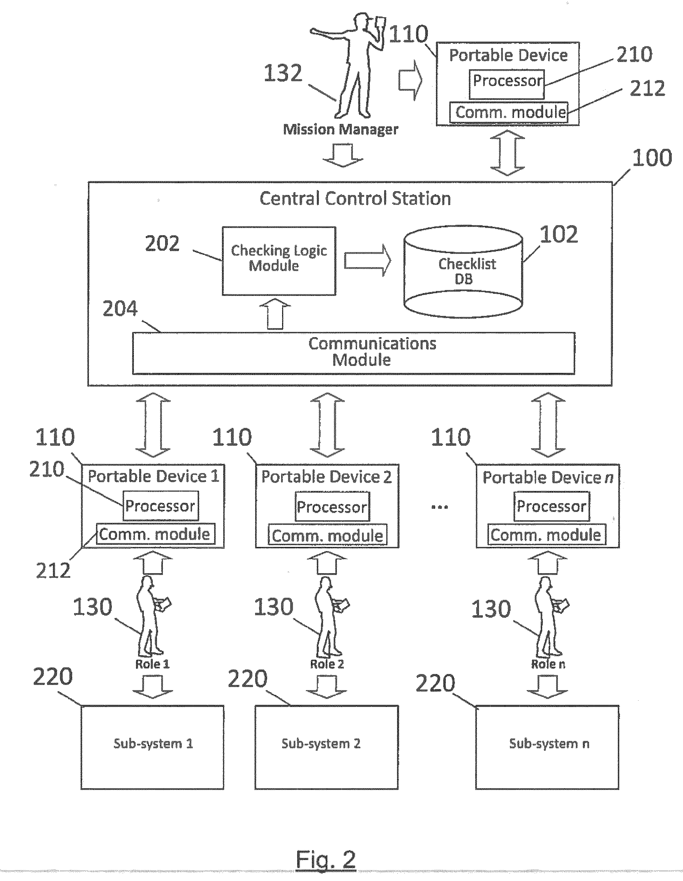

Figure 1 illustrates an embodiment of a system for validating pre-operation phase of a vehicle 120. In particular, the vehicle shown is a UAV and the pre-operation phase is a preflight phase. Figure 2 depicts a logical schematic representation of Figure 1.

The system comprises a central control station 100 with access to a network-centric database 102 storing a plurality of task specific electronic checklists. The central control station 100 may be, for instance, a computer, a laptop or a similar hardware device, with a CPU 202, a communications module 204 (preferably a wireless communications module), a screen 104 and an input device 106 (e.g. a mouse). The central control station 100 may be located at a central facility, although it is made preferably portable, with all the elements contained inside a case 108 to facilitate transportation to the site where the vehicle 120 is located and the checking tasks are to be performed.

Each checklist is assigned to a different role, such as mechanics, electronics, communications, etc. Each role is normally performed by a different validator 130 (i.e. a team member; for instance a pilot, flight crew member, ground crew member, mechanic, communications engineer, operator, or a hardware engineer), although in some cases, a single validator 130 may be in charge of different roles (for instance, a hardware engineer may in charge of two roles: checking the mechanics and checking the electronics). This way, the mechanic will have a set of tasks to validate, related to the mechanical components of the vehicle 120, whereas the hardware engineer will have other tasks to check, more focused on the electronic components of the UAV. Figure 2 represents each validator 130 with a single role for checking a different subsystem 220 (the mechanics and/or electronics of the vehicle 120, communication systems, etc.).

The system also comprises a plurality of portable electronic devices 110 with a processing unit 210 and a communications module 212 to establish a link with the central control station 100. The portable electronic devices 110 are preferably wirelessly coupled to the central control station 100, although wired communication to establish a wired network may also be employed. The wireless communication may be performed through any known wireless communication means, preferably a radio frequency communication such as WiFi or Bluetooth, although alternative means using for instance optical or acoustic linkage means can be employed. The portable electronic devices 110 also comprise a display 116 and an input device 118 as I/O interface for the validator 130. In Figure 1 the display 116 and input device 118 is implemented in a tactile screen.

Each portable electronic device 110 is assigned to a validator 130 to perform the checking of individualized tasks. Hence, each validator 130 will be equipped with a mobile device connected to the network-centric database 102. The display 116 of the portable electronic device 110 is used to show an individualized task electronic checklist 112 to the validator 130. The validator 130 can validate, using an input means (e.g. using a tactile screen), the implemented tasks 114 of the checklist 112, once they have been checked. The portable electronic device 110 communicates the individual checklist results, including the implemented tasks 114, to the central control station 100. The mission manager 132, the person in charge of reviewing the flight mission before flight and taking decisions about whether start the flight or not, monitors the validation processes in real time during execution of the validator's tasks. To that end, the mission manager 132 may be equipped with a portable electronic device 110, retrieving all the necessary checklist information from the database 102. Alternatively, the mission manager 132 may be monitoring the whole operation at the central control station 100 (the validator's checklist information being displayed in the screen 104).

The network-centric preflight checklist system improves traditional validation processes at the preflight phase of UAS operations, replacing traditional paper-made preflight checklists with electronic checklists systems.

The system facilitates the management of the preflight phase and coordination among the team members (i.e. the validators 130). Individual tasks of each validator 130 can be assigned at the beginning of the validation process or even during its execution. This initial assignment is preferably made by the central control station 100, which will distribute the individualized task electronic checklist 112 to each portable electronic device 110 at the start of the preflight phase. Alternatively, the individualized task electronic checklists 112 may be locally stored in the portable electronic devices 110, so that each validator 130 only has to choose the specific checklist in the portable electronic device 110 (e.g. the mechanics will select the task checklist corresponding to his/her function).

Besides, the portable electronic device 110 of each validator 130 may also be granted certain access rights to review some checklist points and to request the updated state of checklists of other validators 130. The portable electronic device 110 preferably displays the individualized checking tasks in priority order and provides remote access, according to the access rights, to the checklist information stored in the database 102.

The system makes the coordination of the verification tasks easier and the whole validation process more efficient. Dependent tasks are easily coordinated. The tasks bounded to another validator's verifications can be executed when the independent tasks have been finished and remotely approved. Validators 130 are able to electronically confirm that they have performed (e.g. checked, signed) their checklist points (implemented tasks 114), which are automatically updated in the database 102 and shared with the rest of the team. Thus, the mission manager 132 may be able to make decisions in real time about the mission, based on current information.

Sharing information in real time also allows two or more validators 130 to work together on the same checklist, reducing the risk of tasks overlapping and optimizing the validation process. Additional routines can be programmed to help the mission manager 132 to take decisions and reduce the validation team workload. For instance, some warnings may appear if the radio controller's lever is not in the expected position or if some mechanical or electronic component's end-of-life has expired without being replaced by a new spare part. In these cases, the system could take control to disable the engine power of the UAV 120, avoiding the take-off sequence and informing of the situation. Furthermore, depending on the current status of the checklists of the validators, the system can autonomously modify the checklists. The modification may include, for instance, halting a particular task of a validator's checklist, or altering the order of the tasks in the checklist.

The system can also effectively improve the communication among the team members (validators 130 and mission manager 132). Improvement on the coordination among team members reduces the number of communications needed to develop certain checking tasks and consequently the potential risk of misunderstandings. Coordination tasks of the team members are mostly based on oral communication. Validators 130 typically use different electronic devices to communicate orally (e.g. walky-talkies) but they do not use such devices to communicate written information. The portable electronic devices 110 provide an alternative communications channel to share writing information. This channel is an effective solution in noisy environments and all the written communication events can be automatically recorded in the central database.

The system increases the level of automation of the validation process. The information frequently reported by the validators 130 allows automatically validating the overall status of the system at any stage of the checking process. For instance, not only possible system issues can be immediately identified but also the possible issues produced by the confluence of several seemingly non-relevant system issues. Historical information of the flights and the hours of use of each UAS component can be stored in the database 102. Such information can be used to autonomously identify when a component is about to reach its end of life. Creation of dynamic checklists when a system failure arises can also be envisaged.

The system further improves the reliability of the UAS mission. Current checklists are usually made of paper which can be easily damaged. If the checklist is damaged and any important information is missed, the success of the mission could be put at risk or, at least, the checking process should be repeated again. The present system is more robust, since the hardware support is more resistant and the checking information is frequently issued to the central database 102, so that no important information is missed.

Most of the checking events reported by the validators 130 through their portable electronic devices 110 are stored in the central database 102 of the system. This kind of information stored in the database 102 makes possible the traceability of the validation processes for further analysis. This information may be useful to improve the reliability of upcoming missions. The historical information of flights and missions can be also stored in the database 102 and be remotely accessible to the validators 130 and mission manager 132 during the validation process.

The management of the database information can be conveniently exploited to provide relevant information of the validator's task checklists and missions. For instance, it is possible to know which validator has a major expertise in checking tasks of a certain system or how much time a certain component has been used. The automation of certain validation tasks reduces the workload and stress of the mission manager 132 and also increases the reliability of the mission. The validation team is continuously aware of the overall status of the pre-operation phase. This fact not only increases the efficiency of the validation process but also the reliability of the mission. On the contrary, in current systems the validators are only aware of their own duties and have only a partial vision of the pre-operation phase.

The present system therefore increases the efficiency of inspection work done by human validators prior to the flight mission. Furthermore, it increments the efficiency of the validation process and makes the mission more robust and reliable.

## Claims

1. A system for validating the pre-operation phase of a vehicle (120), comprising:
a central control station (100) with access to a network-centric database (102) storing a plurality of individualized task electronic checklists, and
a plurality of portable electronic devices (110) comprising a communications module (212) to establish a link with the central control station (100), wherein each portable electronic device (110) is assigned to a validator (130), the portable electronic device further comprising a display (116), an input device (118) and a processing unit (210) configured to:
- display at least one individualized task electronic checklist (112) to the validator (130);
- receive individual checklist results from the validator (130) of one or more implemented tasks (114) on the checklist (112);
- communicate the individual checklist results to the central control station (100);
wherein the central control station (100) is configured to automatically update the network-centric database (102) with the individual checklist results of the portable electronic devices (110); and
wherein the updated checklist information stored in the network-centric database (102) is remotely accessible to the portable electronic devices (110).

2. The system of claim 1, wherein the individualized task electronic checklists (112) comprise a sequence of checklist operations to be performed in a determined order.

3. The system of any preceding claim, wherein the central control station (100) is configured to:
dynamically update the individualized task electronic checklists based on the individual checklist results received; and
send the updated individualized task electronic checklists to the portable electronic devices (110).

4. The system of any preceding claim, wherein the central control station (100) is configured to provide an accumulation of the individual checklist results of the portable electronic devices (110) to a mission manager (132) for deciding on initiating a mission, aborting a mission, temporarily postponing a mission of the vehicle (120), or modifying the individualized task electronic checklists.

5. The system of any preceding claim, wherein the central control station (100) is configured to provide a real time evaluation of the validation process of the pre-operation phase.

6. The system of any preceding claim, where the portable electronic devices (110) comprise handheld electronic devices.

7. The system of any preceding claim, wherein the vehicle (120) comprises an aircraft or an unmanned aerial vehicle and pre-operation comprises preflight.

8. The system of claim 7, where the individualized task electronic checklists comprise a plurality of preflight checklist tasks including aircraft systems, aircraft structure, aircraft flight surfaces, aircraft sensors, aircraft lighting systems, aircraft weapon systems, aircraft communication systems, aircraft control systems, aircraft fuel, aircraft propulsion systems, specific aircraft requirement based on an aircraft mission, specific aircraft requirements based on environmental conditions, or a combination thereof.

9. The system of any preceding claim, wherein the network-centric database (102) contains historical information of previous missions of the vehicle (120) and the hours of use of components of the vehicle (120) to automatically determine when a component is about to reach its end of life.

10. The system of any preceding claim, wherein the communications module of the portable electronic devices (110) is a wireless communications module.

11. A method for validating the pre-operation phase of a vehicle (120), comprising:
coupling a plurality of portable electronic devices (110) to a central control station (100) with access to a network-centric database (102) storing a plurality of individualized task electronic checklists;
assigning each portable electronic device (110) to a validator (130);
displaying in each portable electronic device (110) at least one individualized task electronic checklist (112) assigned to the validator (130);
upon validation of implemented tasks (114) of the checklist (112), communicating the individual checklist results of the portable electronic devices (110) to the central control station (100);
automatically updating the network-centric database (102) with the individual checklist results of the portable electronic devices (110); and
providing the portable electronic devices (110) with remote access to the updated checklist information stored in the network-centric database (102).

12. The method of claim 11, further comprising:
dynamically updating, in the network-centric database (102), the individualized task electronic checklists based on the individual checklist results received; and
sending the updated individualized task electronic checklists to the portable electronic devices (110).

13. The method of any of claims 11 to 12, further comprising providing a mission manager (132) with an accumulation of the individual checklist results of the portable electronic devices (110) for deciding on initiating a mission, aborting a mission, temporary postponing a mission of the vehicle (120), or modifying the individualized task electronic checklists.

14. The method of any of claims 11 to 13, wherein the vehicle (120) comprises an aircraft or an unmanned aerial vehicle and pre-operation comprises preflight.

15. The method of any of claims 11 to 14, where the individualized task electronic checklists comprise a plurality of preflight checklist tasks including aircraft systems, aircraft structure, aircraft flight surfaces, aircraft sensors, aircraft lighting systems, aircraft weapon systems, aircraft communication systems, aircraft control systems, aircraft fuel, aircraft propulsion systems, specific aircraft requirement based on an aircraft mission, specific aircraft requirements based on environmental conditions, or a combination thereof.
